# EUROPÄISCHE PATENTANMELDUNG

(11) **EP 0 795 495 A2**
(43) Veröffentlichungstag der Anmeldung: **17.09.1997**
(21) Anmeldenummer: 97890037.1
(22) Anmeldetag: 28.02.1997
(51) Int. Cl.: B65G 1/08

(54) **Beladeeinrichtung**

(30) Priorität: 13.03.1996 AT 475/96
(71) Anmelder: P.E.E.M. FÖRDERANLAGEN Ges.m.b.H., 8071 Graz (AT)
(72) Erfinder: Neukam, Helmut, 8071 Hausmannstàtten (AT)
(74) Vertreter: Kliment, Peter, Dipl.-Ing.

(57) **Zusammenfassung**

Beladeeinrichtung zum Beschicken einer Warenausgabeeinrichtung mit mehreren nebeneinander angeordneten, im wesentlichen vertikal verlaufenden Füllschächten (3) mit Warenstücken (2), wobei sich Füllöffnungen (6) der Füllschächte (3) im wesentlichen über deren gesamte Höhe erstrecken. Um ein rasches Befüllen der Füllschächte (3) zu ermöglichen, ist vorgesehen, daß im wesentlichen hcrizontal verlaufende Speicherschächte (9) vorgesehen sind, deren den Füllschächten (3) zugekehrten Ausgabeenden (10) in einer parallel zu den Füllschächten (3) verlaufenden Ebene angeordnet und mit Ausgabeeinrichtungen versehen sind, die z.B. aus dem lichten Querschnitt der Speicherschächte (9) bewegbare Anschläge (12) aufweisen, wobei zwischen den Füllschächten (3) und den Ausgabeenden (10) der Speicherschächte (9) ein parallel zur Ebene der Füllschächte (11) verfahrbares Fahrgestell (23) vorgesehen ist, das eine sich im wesentlichen parallel zu den Hochachsen der Füllschächte (3) verlaufende Führung (25) aufweist, in der ein Schlitten (26) im wesentlichen vertikal verschiebbar gehalten ist, der mindestens einen antreibbaren horizontal fördernden Förderer (27, 28) aufweist, der senkrecht zur Fahrtrichtung des Fahrgestells (23) fördert.

## Beschreibung

Die Erfindung bezieht sich auf eine Beladeeinrichtung gemäß dem Oberbegriff des Anspruches 1.

Zumeist werden solche Warenausgabeeinrichtungen von Hand aus befüllt. Dabei werden die einzelnen Warenstücke oder kleinere Stapel von Warenstücken von einer Palette oder aus einem entsprechenden Behälter entnommen und in die oft sehr hohen Füllschächte eingeschoben. Dies ist jedoch mit einem entsprechend hohen Personalaufwand verbunden, wobei das Personal in oft unangenehmer Höhe arbeiten muß, wodurch die Arbeitsgeschwindigkeit naturgemäß absinkt.

Ziel der Erfindung ist es diese Nachteile zu vermeiden und eine Beladeeinrichtung für eine Warenausgabeeinrichtung der eingangs erwähnten Art vorzuschlagen, die eine weitgehend maschinelle Befüllung der Warenausgabeeinrichtung ermöglicht.

Erfindungsgemäß wird dies bei einer eingangs erwähnten Warenausgabeeinrichtung durch die kennzeichnenden Merkmale des Anspruches 1 erreicht.

Durch die vorgeschlagenen Maßnahmen ist durch die Speicherschächte ein entsprechender Pufferspeicher geschaffen, wodurch Verzögerungen bei der Warenausgabe durch eine unzureichende Befüllung der Füllschächte vermieden werden. Außerdem können die Speicherschächte in solchen Höhenlagen befüllt werden, in denen das Personal bequem arbeiten kann, d.h. es kann ein Arbeiten in gebückter oder stark gestreckter Haltung vermieden werden, wodurch auch die Gefahr von gesundheitlichen Schäden entsprechend reduziert wird.

Mit der vorgeschlagenen Einrichtung können die Warenstücke oder Stapel von diesen aus den Speicherschächten abgezogen und mittels des Fahrgestells und des Schlittens in einen vorgesehenen Füllschacht oberhalb dessen oberstem Warenstück eingeschoben werden.

Die Ausgabeeinrichtungen der Speicherschächte können an sich in beliebiger Weise ausgebildet sein und müssen lediglich eine einzelweise Abgabe von Warenstücken oder Warenstapel ermöglichen, doch sind in den lichten Querschnitt der Speicherschächte einbringbare Anschläge hiefür sehr gut geeignet.

Durch die Maßnahmen nach dem Anspruch 2 können mehrere Warenstapel aus den Speicherschächten entnommen und in einen bestimmten Füllschacht überführt werden, wobei der Abstand zwischen zwei Warenstapeln auf dem Schlitten eingestellt werden kann.

In diesem Zusammenhang ergibt sich durch die Merkmale der Ansprüche 3 und 4 eine sehr einfache Möglichkeit der Einhaltung eines bestimmten Abstandes zwischen zwei auf dem Schlitten befindlichen Warenstapel.

Durch die Merkmale des Anspruches 5 ergibt sich ein sehr einfacher Aufbau, der, abgesehen von der Steuerung der Antriebe, bei einer Umstellung auf Warenstücke mit einer anders dimensionierten Aufstandsfläche keine Umrüstarbeiten im Bereich des Schlittens erfordert.

Durch die Merkmale des Anspruches 6 ergibt sich eine in konstruktiver Hinsicht sehr einfache Lösung, wobei die Speicherschächte nur ein relativ geringes Gefälle aufzuweisen brauchen.

Die Merkmale des Anspruches 7 ermöglichen eine Abbremsen der Warenstapel während des Durchlaufens der als Durchlaufregale ausgebildeten Speicherschächte, sodaß die Warenstapel eine vorgegebenen Geschwindigkeit nicht überschreiten können. Weiters können die einzelnen Warenstücke oder Warenstapel in vorbestimmten Abständen voneinander in den Speicherschächten gehalten werden. Dadurch wird ein Verketten von Warenstücken benachbarter Warenstapel sicher verhindert.

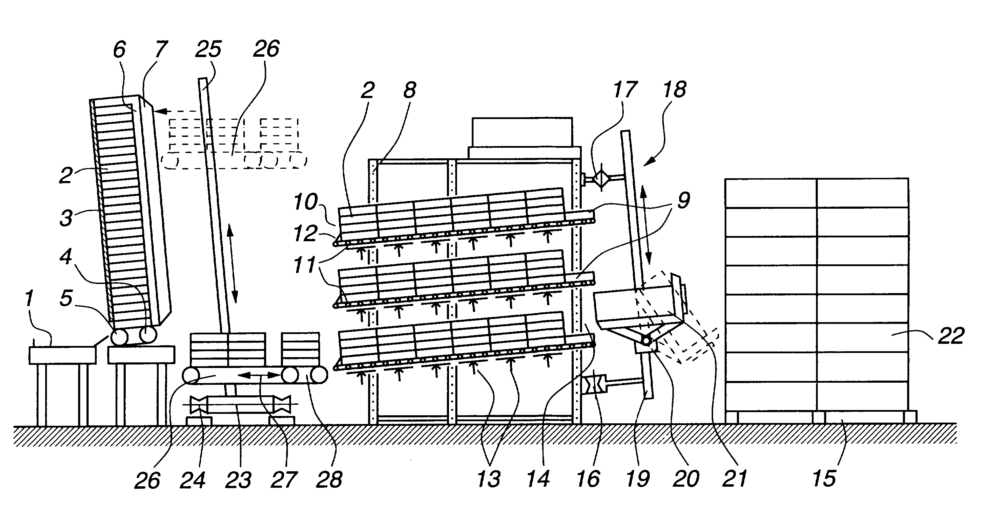

Die Erfindung wird nun anhand der Zeichnung näher erläutert, die schematisch eine erfindungsgemäße Einrichtung zeigt.

Neben einem Förderband 1 für den Abtransport von auszugebenden Warenstücken 2 sind Füllschächte 3 angeordnet, die mit der Vertikalen einen kleinen Winkel einschließen und nach oben zu gegen das Förderband 1 geneigt verlaufen.

In diesen Füllschächten 3 sind die auszugebenden Warenstücke 2 gestapelt, wobei die Füllschächte, die im wesentlichen in einer Ebene nebeneinander angeordnet sind, an ihren unteren Enden mit Ausschiebern 4 versehen sind, die die Warenstücke 2 einzelweise auf das Förderband 1 ausschieben. Dabei ist zur Erfassung eines jeden ausgeschobenen Warenstückes 2 eine Lichtschranke 5 vorgesehen, die mit einem nicht dargestellten Rechenwerk verbunden ist.

An der vom Förderband 1 abgekehrten Seite sind die Füllschächte 3 mit sich im wesentlichen über deren gesamte Höhe erstreckenden Füllöffnungen 6 versehen, die von seitlich angeordneten Leitblechen 7 begrenzt sind.

In einem Abstand von den Füllöffnungen 6 der Füllschächte 3 sind in einem Gestell 8 Speicherschächte 9 angeordnet, die, abgesehen von einer geringen Neigung, im wesentlichen horizontal verlaufen und deren Ausgabeenden 10 den Füllöffnungen 7 zugekehrt sind.

Dabei sind die Speicherschächte 9 mit Gefällsrollenbahnen 11 versehen, wobei im Bereich der Ausgabeenden 10 je eine durch einen in den lichten Raum der Speicherschächte 9 einschwenkbaren Anschlag 12 gebildete Ausgabeeinrichtung vorgesehen ist. Entlang der Gefällsrollenbahnen 11 sind über deren Länge verteilt angeordnete Bremseinrichtungen vorgesehen, die durch die Pfeile 13 symbolisiert sind. Mit diesen Bremseinrichtungen können die Stapel von Warenstücken 2 beim Abrollen über die Gefällsrollenbahnen 11 gebremst werden, sodaß diese eine vorgegebene Geschwindigkeit nicht überschreiten. Außerdem ist durch diese Bremseinrichtungen auch möglich, die einzelnen Warenstapel in einem geringen Abstand voneinander zu halten.

Die Ausgabeenden 10 der Speicherschächte 9 befinden sich in einer zur Ebene der Füllschächte 3 im wesentlichen parallelen Ebene.

Befüllt werden die Speicherschächte 9 an deren von den Füllschächten 3 abgekehrten Enden 14, die sich ebenfalls in einer zur Ebene der Füllschächte 3 im wesentlichen parallelen Ebene.

In einem Abstand von den Enden 14 der Speicherschächte 9 ist ein Stellplatz für Paletten 15 vorgesehen.

An der dem Palettenstellplatz zugekehrten Seite des Gestells 8 sind im obersten und untersten Bereich des Gestelles 8 Führungsschienen 16, 17 angeordnet, in denen ein Gestell 18 parallel zur Ebene der Enden 14 der Speicherschächte 8 verschiebbar ist.

Dieses Gestell 18 weist einen Träger 19, entlang dem ein Schlitten 20 im wesentlichen vertikal verschiebbar ist. Dieser Schlitten 20 ist mit einer um eine in Fahrtrichtung des Gestelles 18 verlaufende horizontale Achse schwenkbaren Aufnahme 21 verbunden, die an der den Speicherschächten 9 zugekehrten Seite offen ist.

In diese Aufnahme 21 können die aus den auf einer Palette 15 gestapelten Packungen 22 entnommenen Warenstücke in der strichliert dargestellten geschwenkten Lage eingelegt werden und danach die Aufnahme 21 in die mit vollen Strichen dargestellte Lage gebracht. Nach dem Erreichen des vorgesehenen Speicherschachtes 9 durch Verfahren des Gestelles 18 und des Schlittens 20 wird die Aufnahme 21 im Uhrzeigersinn verschwenkt, sodaß die Warenstücke 2 oder Stapel derselben in den vorgesehenen Speicherschacht 9 gleiten. In diesen rutschen die Stapel von Warenstücken 2 über die Gefällsrollenbahnen 11 in Richtung zum ausgabeseitigen Ende 10 der Speicherschächte 9 hin. Dabei werden die Stapel von den Bremseinrichtungen, die durch die Pfeile 13 symbolisiert sind, auf eine vorbestimmte geringe Geschwindigkeit abgebremst. Dabei kann weiters vorgesehen sein, die eingelagerten Warenstapel mittels der Bremseinrichtungen in vorbestimmten Abständen voneinander zu halten, wobei ein Warenstapel an dem in den lichten Querschnitt des Speicherschachtes 9 hineinragende Anschlag 12 und aus diesem rückziehbaren Anschlag 12 ansteht.

Zwischen den Speicherschächten 9 und den Füllschächten 3 ist ein weiteres Fahrgestell 23 auf Schienen 24 parallel zu den Füllschächten 3 verfahrbar, wobei das Fahrgestell 23 ein im wesentlichen parallel zu den Hochachsen der Füllschächte 3 verlaufende Führung 25 aufweist. Entlang dieser Führung 25 ist ein Schlitten 26 im wesentlichen vertikal verstellbar gehalten.

Dieser Schlitten 26 ist mit zwei senkrecht zur Fahrtrichtung des Gestells 23 fördernde Förderer 27, 28 versehen die in einer gemeinsamen horizontalen ebene fördern. Dabei überlappen die beiden, z.B. als Kettenförderer ausgebildeten Förderer 27, 28 einander seitlich, sodaß eine im wesentlichen ebene Übergabe der Warenstücke 2 von einem Förderer zum nächsten Förderer gegeben ist.

Dabei ist jeder Förderer 27, 28 mit einem separaten Antrieb versehen (nicht dargestellt), wobei die Förderer mit geringfügig unterschiedlichen Geschwindigkeiten angetrieben werden können. Der den Speicherschächten 9 nähere Förderer 28 ist kürzer als der den Füllschächten 3 nähere Förderer 27, wobei die beiden Förderer 27, 28 in den einander benachbarten Endbereichen seitlich überlappen, wodurch eine Übergabe eines Warenstückes 2 oder eines Stapels derselben in einer Ebene sichergestellt ist.

Ist nun ein Füllschacht 3 nachzufüllen, so wird der Schlitten 26 mit einem Speicherschacht 9 ausgerichtet, in dem die entsprechende Ware zwischengelagert ist. Anschließend wird der Anschlag 12 aus dem lichten Querschnitt des entsprechenden Speicherschachtes 9 zurückgezogen, bzw. aus diesem ausgeschwenkt, sodaß ein Warenstapel abgegeben wird. Dabei wird der Fördere 28 aktiviert und auf dieses Weise der Warenstapel von diesem übernommen.

Anschließend werden die Bremseinrichtungen in diesem Speicherschacht gelöst, sodaß die Warenstapel nachrutschen können und der nächste Warenstapel 1 an dem wieder in den lichten Querschnitt des Speicherschachtes 9 eingeschobenen Anschlag 12 anliegt.

Der vom Förderer 27 übernommene Warenstapel wird von dem Förderer 28 gegen das den Füllschächten 3 zugekehrte Ende des Schlittens 26 gefördert, wonach ein weiterer Warenstapel in der oben beschriebenen Weise aus dem Speicherschacht 9 übernommen werden kann.

Die Förderer 27 28 können dabei auch gleichzeitig in Betrieb sein, wobei durch unterschiedliche Fördergeschwindigkeiten dieser beiden Förderer 27, 28 der Abstand zwischen den einzelnen Warenstapeln eingestellt werden kann. Dabei entspricht die Länge des Förderers 27 etwa der Erstreckung eines Warenstapels in dieser Richtung und die Länge des Förderers 28 etwa der Erstreckung zweier Warenstapel in dieser Richtung.

Nach dem Ansteuern des zu befüllenden Füllschachtes 3 durch das Gestell 23, wird der Schlitten auf eine die momentane Füllhöhe des Füllschachtes 3 geringfügig übersteigende Höhe gefahren und die Warenstapel mittels des Förderers 28 in diesen eingeschoben.

Da auf dem Schlitten 26 mehrere Warenstapel übernommen werden können, ergeben sich nur entsprechend wenige Leerfahrten des Gestelles 23, wodurch ein rasches Auffüllen der Füllschächte 3 gewährleistet ist.

## Patentansprüche

1. Beladeeinrichtung zum Beschicken einer Warenausgabeeinrichtung mit mehreren nebeneinander angeordneten, im wesentlichen vertikal verlaufenden Füllschächten (3) mit Warenstücken (2), wobei sich Füllöffnungen (6) der Füllschächte (3) im wesentlichen über deren gesamte Höhe erstrecken, **dadurch gekennzeichnet**, daß im wesentlichen horizontal verlaufende Speicherschächte (9) vorgesehen sind, deren den Füllschächten (3) zugekehrten Ausgabeenden (10) in einer parallel zu den Füllschächten (3) verlaufenden Ebene angeordnet und mit Ausgabeeinrichtungen versehen sind, die z.B. aus dem lichten Querschnitt der Speicherschächte (9) bewegbare Anschläge (12) aufweisen, wobei zwischen den Füllschächten (3) und den Ausgabeenden (10) der Speicherschächte (9) ein parallel zur Ebene der Füllschächte (11) verfahrbares Fahrgestell (23) vorgesehen ist, das eine sich im wesentlichen parallel zu den Hochachsen der Füllschächte (3) verlaufende Führung (25) aufweist, in der ein Schlitten (26) im wesentlichen vertikal verschiebbar gehalten ist, der mindestens einen antreibbaren horizontal fördernden Förderer (27, 28) aufweist, der senkrecht zur Fahrtrichtung des Fahrgestells (23) fördert.

2. Beladeeinrichtung nach Anspruch 1, **dadurch gekennzeichnet**, daß der Schlitten (26) zwei in gleicher Richtung fördernde Förderer (27, 28) aufweist, die eine gemeinsame Förderebene aufweisen.

3. Beladeeinrichtung nach Anspruch 1 und 2, **dadurch gekennzeichnet**, daß die der den Ausgabeenden (10) der Speicherschächte (9) nähere Förderer (27) eine Länge aufweist, die der Erstreckung der Warenstücke (2) in Förderrichtung dieses Förderers (27) entspricht, wogegen der den Füllschächten (3) nähere Förderer (28) eine Länge von zumindest zwei Warenstücken (2) aufweist.

4. Beladeeinrichtung nach einem der Ansprüche 1 bis 3, **dadurch gekennzeichnet**, daß die beiden Förderer (27, 28) mit voneinander verschiedenen Fördergeschwindigkeiten betreibbar sind.

5. Beladeeinrichtung nach einem der Ansprüche 1 bis 4, **dadurch gekennzeichnet,** daß die beiden Förderer (27, 28) mit separat steuerbaren Antrieben versehen sind.

6. Beladeeinrichtung nach einem der Ansprüche 1 bis 5, **dadurch gekennzeichnet**, daß die . Speicherschächte (9) Gefällsrollenbahnen (11) aufweisen.

7. Beladeeinrichtung nach einem der Ansprüche 1 bis 6, **dadurch gekennzeichnet**, daß in den Speicherschächten (9) über deren Länge verteilt angeordnete Bremseinrichtungen vorgesehen sind, wobei der gegenseitige Abstand die Erstreckung der Warenstücke (2) in Längsrichtung der Speicherschächte (9) geringfügig übersteigt.
